(19) Europäisches Patentamt

European Patent Office

Office européen des brevets

(11) **EP 1 215 930 B1**

(12) **EUROPEAN PATENT SPECIFICATION**

(45) Date of publication and mention
of the grant of the patent:
**27.04.2005   Bulletin 2005/17**

(51) Int Cl.⁷: **H04Q 7/38**

(21) Application number: **01127543.5**

(22) Date of filing: **19.11.2001**

(54) **Transceiver station and method for use in cellular radio communications**

Sendeempfangsstation und Verfahren für dessen Benutzung bei zellularer Funkkommunikation

Station émettrice/réceptrice et procédé de son utilisation dans communications cellulaires

(84) Designated Contracting States:
**AT BE CH CY DE DK ES FI FR GB GR IE IT LI LU MC NL PT SE TR**

(30) Priority: **15.12.2000   GB 0030687**

(43) Date of publication of application:
**19.06.2002   Bulletin 2002/25**

(73) Proprietor: **MOTOROLA, INC.**
**Schaumburg, IL 60196 (US)**

(72) Inventors:
• **Bar-On, David**
**Rehovot 76248 (IL)**
• **Goldstein, Mark Motorola**
**Tel Aviv 67899 (IL)**

(74) Representative: **McCormack, Derek James et al**
**Optimus,**
**Grove House,**
**Lutyens Close,**
**Chineham Court**
**Basingstoke, Hampshire RG24 8AG (GB)**

(56) References cited:
**US-A- 5 551 058**

• **"ETSI TS 101 724 v7.2.1: Digital cellular telecommunications system (phase 2+);Location Services (LCS); (Functional description) - Stage 2 (GSM 03.71 version 7.2.1 Release 1998)" , EUROPEAN TELECOMMUNICATION STANDARD, XX, XX, PAGE(S) 1-105 XP002144325 * page 15, paragraph 5.4 - page 17, paragraph 5.4.4.4 * * page 19; figure 3 * * page 19, paragraph 5.6.4 * * page 20, paragraph 5.6.6 * * page 23, paragraph 5.8; table 1 * * page 99, paragraph C.3 * * page 103, paragraph D.3 ***

**Description**

**FIELD OF THE INVENTION**

The present invention relates to a transceiver station and a method for use in cellular radio communications. In particular, the transceiver station is operable to select which of a plurality of candidate base transceiver stations defining communication cells a mobile station is to be served by. The transceiver station may be the mobile station.

**BACKGROUND OF THE INVENTION**

TErrestrial Trunked Radio (TETRA) is a new set of standards defined by the European Telecommunications Standards Institute (ETSI) for multipurpose radio communication systems, which has been adopted in Europe and is being adopted by a growing number of system operators throughout the world. Such operators mainly include public safety organisations, such as the police, military organisations and commercial enterprises that lease communication services on cellular systems to private businesses.

Like other cellular systems, a TETRA based system typically has a grid of base transceiver stations deployed over the coverage area and a plurality of mobile units. The mobile units are also referred to in the art as mobile stations (MS) or subscriber stations or radios. In this specification the expression 'mobile station' or 'MS' embraces mobile and portable radio communication units, radiotelephones and the like. The mobile station may be moving because its user is moving. The mobile station may for example be carried by the user or by a vehicle in or on which the user is travelling.

A mobile station, when on, has at any time a two-way communication link with one base transceiver station. This base station is termed the serving station. It is the station through which communications to other units, including other mobile stations operating within the system, pass. At the same time, measurements and/or calculations may be made with respect to several neighbouring base stations. These measurements and/or calculations are made to maintain an ordered list of preferred candidate base stations to become the serving station of the mobile station when conditions change, e.g. as a result of relocation of the mobile station. This change is known in the art as handoff (or handover). If the cellular communication system does not handoff communications for the mobile station to a new serving base station then calls to and from the mobile station will be lost or terminated due to reduction in the strength or quality of communication signals.

Systems are known in the prior art in which handoff decisions are made by the system infrastructure, i.e. fixed units within the system such as a system controller which is in communication with the base stations of the system. Examples of systems in which system controlled handoffs take place are described for example in GB-A-2262688, GB-A-2308955, GB-A-2273424.

Systems are also known in the prior art in which handoff decisions are made by the mobile station itself. In particular, it is known for selection by a mobile station of a base station to act as serving station to be carried out using measurement of strength and/or quality of signals from base stations and for the mobile station to rank the base stations as potential serving base stations accordingly.

However, the present inventors have appreciated that this approach based upon signal strength/and or quality measuerements by the mobile station is not optimal, because it can lead to excessive or redundant re-selections, and unfortunately a reduction in reliability of communications as a result of such unnecessary re-selections.

US-A-5,551,058 describes a handoff method in which a mobile station (subscriber unit) performs an analysis of the location, proximity and expected duration of exposure of candidate target cells, by measuring the change in distance or range between the mobile station and transceivers associated with each of the target cells. The location of each of the transceivers is sent to the mobile station in a control channel transmission from the transceivers.

**SUMMARY OF THE PRESENT INVENTION**

The present invention is concerned with a transceiver station, which may beneficially be a mobile station, which is operable to make decisions about which base station should be its serving station in a novel and improved manner.

According to the present invention in a first aspect there is provided a mobile radio transceiver station for use in a cellular radio communication system providing communication between the mobile station and a serving one of a plurality of base transceiver stations each defining a cell of the system, the mobile station being operable to make calculations relating to candidates of the base transceiver stations to select which of the candidates should be the serving base transceiver station to the mobile station, the calculations including calculating a rate of change in the distance or range between the mobile station and each candidate base transceiver station and estimating a time the mobile station will be in the cell defined by the candidate base transceiver station, the mobile station being characterised in that it is operable also to derive information from active measurements using signals from the candidate base transceiver stations of the respective locations of such candidate base transceiver stations and to calculate a direction of movement of the mobile station relative to such candidate base transceiver stations and to estimate the time in the cells using the direction of movement information as well as the rate of change in distance or range infomation.

The transceiver station according to the first aspect of the invention is a mobile station, i.e. the mobile station whose serving base station has to be selected. This is preferred to carrying out a selection procedure in a base transceiver station, because it allows a large amount of computing by a fixed transceiver of the system, and also signalling to and from individual mobile stations, to be avoided.

The mobile station may calculate the respective distances by recording the locations of the base transceiver stations including the candidate stations. The location of each of the base transceiver stations may be stored in a memory of the mobile station. The information is derived by the mobile station from active measurements carried out by the mobile station using signals from each of the base transceiver stations received by the mobile station.

The mobile station may be operable to measure its own location and thereby to calculate its distance from each of the candidate base transceiver stations. For example, the mobile station may include a global positioning device and may be operable to measure its own location by signals provided by the global positioning device. Alternatively, the mobile station may be operable to measure its own position by measuring the time of arrival or time difference of arrival of signals from base transceiver stations. A method of determining in a mobile station the location of the mobile station in this manner is described in the Applicant's copending UK Patent Application Serial No. GB-A-2368240 (GB 0025762.6).

The estimated length of time for each candidate base transceiver station may be calculated by the mobile station knowing the direction of travel of the mobile station relative to the base transceiver stations and the speed of travel of the mobile station. The speed of travel can be determined by the mobile station from the rate of change of location of the mobile station, the location being determined as desribed above.

The transceiver station may thereby select as the serving base station the one of the candidate stations defining the cell in which the mobile station is estimated to remain the longest.

The mobile station may be operable to measure the strength and/or quality of signals from base transceiver stations. Such measurements may be carried out by procedures which are known per se. The mobile station may thereby produce a list of the candidate base transceiver stations from the signal strength and/or quality measurement information. For example, the mobile station may rank the base transceiver stations according to the strength and/or quality measurements of the signals received from them by the mobile station and to list a number of the top ranked stations as the candidate base transceiver stations. For example, the top ranked X% of the ranked base transceiver stations, e.g. where X is a predetermined number such as from 5 to 50 depending on the number of base stations and the number of mobile stations in the system, may be chosen as candidate base transceiver stations.

After producing a list of the candidate base transceiver stations in this way, the mobile station may select the candidate base transceiver station to act as serving station using information about direction and speed of travel of the mobile station obtained as described above. The selection may take into account a rating or ranking of the base transceiver stations previously obtained according to signal strength and/or quality information as well as a rating and or ranking according to the direction and speed of travel information (converted into estimated length of time in a given cell). Examples of such combinations are described later.

The mobile station according to the first aspect of the invention may be operable to carry out the calculations repeatedly whereby the base transceiver station seleted to act as the serving station is repeatedly re-assessed. The mobile station may repeatedly carry out the required measurements repeatedly to allow the transceiver station to carry out the calculations.

The mobile station according to the first aspect of the invention may be further operable to switch its serving base transceiver station from one station to another on the basis of the selection (carried out by itself or other fixed transceiver station) from the candidate stations of that other base transceiver station, whereby radio communications are carried out between the mobile station and that selected other base transceiver station as serving station.

According to the present invention in a second aspect, there is provided a a method of operation in a cellular communications system providing radio communication between mobile stations and base transceiver stations wherein the mobile stations are operable to make calculations relating to candidates of the base transceiver stations to select which of the candidates should be the serving base transceiver station to the mobile station, the calculations including calculating a rate of change in the distance or range between the mobile station and each candidate base transceiver station and estimating a time the mobile station will be in the cell defined by the candidate base transceiver station, wherein the system includes at least one mobile station which is a mobile station according to claim 1 and wherein the at least one mobile station according to claim 1 derives information from active measurements using signals from the candidate base transceiver stations of the respective locations of such candidate base transceiver stations and calculates a direction of movement of the mobile station relative to such candidate base transceiver stations and estimates the time in the cells using the direction of movement information as well as the rate of change in distance or range information.

The invention allows the selection of a serving base transceiver station for a given mobile station in a cellular system to be carried out based on information derived by the mobile station relating to the location of the base transceiver stations and direction of movement of the mobile station to estimate the length of time the mobile station will be in a given cell of the system. This novel approach beneficially reduces the number of handoffs and the number of consequent possible disconnections the mobile station might experience when moving through different cells of the system.

Embodiments of the present invention will now be described by way of eaxmple with reference to the accompanying drawings, in which:

**BRIEF DESCRIPTION OF THE ACCOMPANYING DRAWINGS**

Figure 1 is a schematic illustration of a terrestrial cellular communication system, constructed and operating in accordance with an embodiment of the present invention;
Figure 2 is a schematic block diagram illustrating the construction and operation of a mobile station embodying the invention as used in the system illustrated in Figure 1; and
Figure 3 is a schematic flow diagram illustrating a method for operating the cellular communication system of Figure 1, operating in accordance with an embodiment of the present invention.

**DETAILED DESCRIPTION OF EMBODIMENTS OF THE** INVENTION

The term "candidate cells" herein below refers to a plurality of cells from which the mobile station or MS selects a target cell defined by a given base transceiver station or BTS, to enable a communication session having a high reliability and a high quality of signal to take place. The term "handoff" herein refers to switching the communication link between a MS and a current BTS, to another selected BTS. The term "remote unit" herein refers to a wireless or a wired telephonic unit which communicates with the MS via the cellular system. A remote unit can be part of a public switched telephone network, the same cellular communication network to which the mobile unit is connected to, or a different network which can be connected to that network.

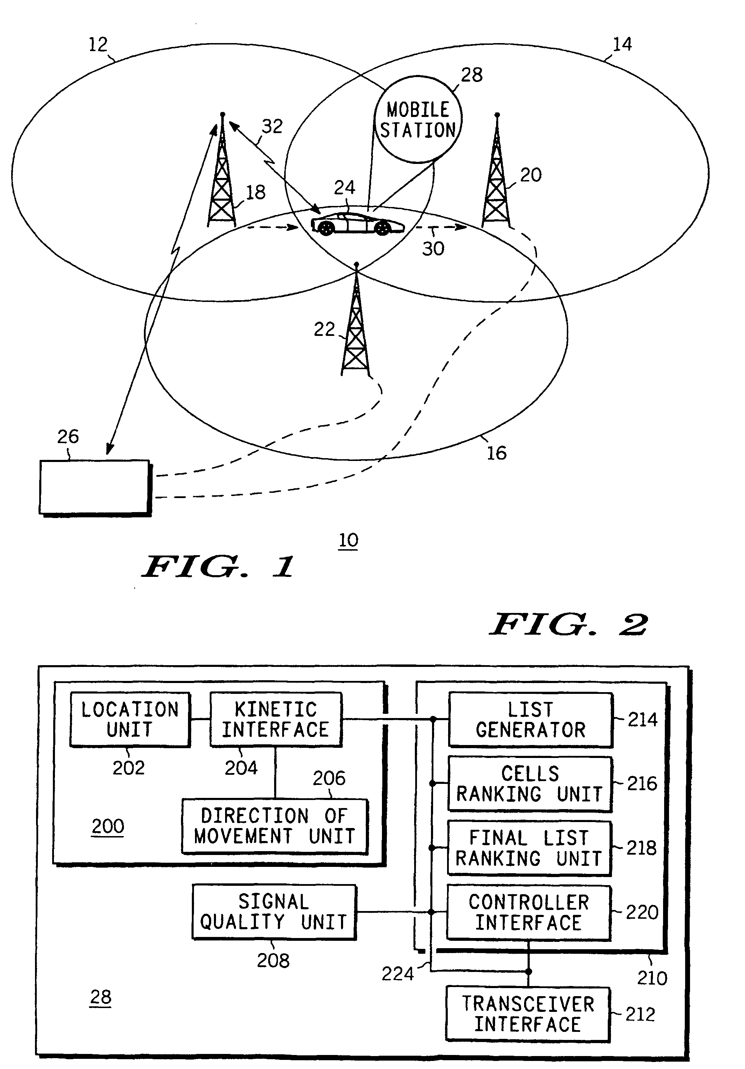

Reference is now made to Figure 1, which is a schematic illustration of a terrestrial cellular communication system, generally referenced 10, constructed and operating in accordance with an embodiment of the present invention. System 10 includes a gateway 26, a plurality of base transceiver stations 18, 20 and 22 and a plurality of mobile stations such as a mobile station 28 . Mobile station 28 is carried by a moving vehicle 24. Base stations 18, 20 and 22 define communication service cells 12, 14 and 16, respectively.

Gateway 26 is a router which interfaces between a conventional data exchange infrastructure, such as a public switched telephone network and a cellular communication system, or between two cellular communication systems. It may also act as system controller for the network as illustrated. It is in communication with the base stations 18, 20 and 22. Base stations 18, 20 and 22 are linked by radio communication or by wireline to the gateway 26. Mobile station 28 is a unit having its own signal processor which manages the communication session between itself and a remote unit (not shown)via one or more of the base stations. Each of the base stations 18, 20 and 22 comprises one or more fixed transceivers which can be linked by radio communication to each of the mobile stations in the cell that it serves. Base stations 18, 20 and 22 are linked by radio communication or by wireline to gateway 26.

The vehicle 24 is moving on the surface of the Earth. Each of the cells 12, 14 and 16 defines a region within which the mobile station 28 can establish a communication link with each of the base stations 18, 20 and 22, respectively. Such communication link is provided by a selected communication channel specific to a given transceiver of the base station in a known manner.

As the vehicle 24 moves, the mobile station 28 can transfer from one cell to another. When the mobile station 28 initially connects to cellular communication system 10, the mobile station 28 selects a target cell such as cell 12, in order to establish communication with a remote unit (not shown). This process is known as "servicing cell determination".

When the mobile staion 28 roams through the cells 12, 14 and 16 and posssibly others (not shown), it searches for candidate cells, in order to maintain continuous communication with the remote unit, even after disconnecting from the initial target cell. Each of the cells 12, 14 and 16 is predetermined, and some regions can be in overlaps between these cells. The mobile station 28 on vehicle 24 moves within cell 12 in a direction designated by arrow 30 in Figure 1. Eventually, mobile station 28 reaches the boundary of cell 12. The mobile station 28 determines that it has reached the boundary of cell 12, by detecting a change in one or more of a plurality of parameters. Such parameters can include the quality of the signal which mobile station 28 receives from the base station 18, the distance of the mobile station 28 from the centre of the cell 12 (when using global positioning system or triangulation), and the like. When the mobile station 28 reaches the boundary of the cell 12, it has to handoff the call to a new base station, such as base station 20 or 22 (or any other suitable BTS, not shown in Figure 1).

Each of the base stations 18, 20 and 22 transmits system control information to the mobile station 28 via a control channel. It is noted that the control information can include the cell identification code, physical coordinates of the base station, communication coverage, other topographical information, availability, and the like. Each control channel is reserved for each of the cells 12, 14 and 16. According to the example shown in Figure 1, the mobile station 28 receives control information from the base station 18 via a radio link 32. The control information includes the characteristics of available communication channels, and the current time and date. The mobile station 28 can determine its instantaneous location relative to the base stations 18, 20 and 22. This may be done by measuring its own position using a global positioning system device (not shown) incorporated within the mobile station or by measuring its own instantaneous distance from each of the base stations 18, 20 and 22 and calculating the position by triangulation in the manner described in copending Application No. GB 0025762. The mobile station 28 can also determine its own speed and direction of movement relative to the base stations 18, 20 and 22 from a record of the locations of the base stations 18, 20 and 22 and the changes in its own location with time.

The mobile station 28 determines the probable time $T_n$ that the vehicle 24 and hence the mobile station 28 will remain in the coverage area of the n-th cell, according to the estimated speed and direction of movement of the vehicle 24 and mobile station 28. When determining $T_n$, the mobile station 28 assumes that the coverage areas of cells 12, 14 and 16 are approximately equal. According to the example shown in Figure 1, there is a high probability that the mobile station 28 will remain longer in the cell 14 than in the cell 16, because the mobile station 28 is moving in direction 30 toward the base station 20. The mobile station 28 further determines the rank of each of the cells 12, 14 and 16. The rank can be a predetermined function of different parameters such as $T_n$, the strength and/or quality of the signal received from the base station of each cell, and the like. The cell with the greatest rank can be selected for handoff. For example, if the signal to noise ratio in cell 16 is greater than the signal to noise ratio in cell 14 by 10%, but $T_{14}$ is twice as much as $T_{16}$, then mobile unit 24 can switch to cell 14, because the rank of cell 14 is greater than the rank of cell 16. A procedure for ranking to provide handoff to a candidate cell will be described in detail later.

Alternatively, the mobile station 28 can be connected by radio link simultaneously to more than one base station, such as base stations 18 and 22, via two different channels, for example in IS-95. If for example, the mobile station 28 loses the connection with the base station 22, then the mobile station 28 can receive the control information from the base station 18, whereby it can select another base station for hand off, such as the base station 20.

Reference is now made to Figure 2, which is a schematic illustration in detail, of the mobile station 28 employed in the system 10 shown in Figure 1. The mobile station 28 includes a kinetic unit 200, a signal quality unit 208, a controller 210 and a control transceiver interface 212. The kinetic unit 200 may include a location unit 202, a direction of movement unit 206 and a kinetic interface 204. The controller 210 includes a list generator 214, a cells ranking unit 216, a final list ranking unit 218 and a controller interface 220.

The kinetic unit 200 determines the location, direction of movement and the speed of the mobile station 28. The controller 210 determines the rank of a plurality of cells containing base stations. The signal quality unit 208 determines the quality of the communication signal which the mobile station 28 receives (i.e., forward voice channel). The kinetic unit 200 is connected to the controller 210. The control transceiver interface 212 is connected to the signal quality unit 208, to the controller 210 and by radio communication to a base station.

The kinetic interface 204 receives a signal 224 from the transceiver interface 212. The location unit 202 determines the instantaneous location of the mobile station 28 relative to nearby base stations, in one of the ways described earlier. The location unit 202 sends data in respect of location of the mobile station 28, to the kinetic interface 204. The kinetic interface 204 processes the data and sends it to the controller 210. The direction of movement unit 206 sends data in respect of direction of movement of the mobile station 28 to the kinetic interface 204. The kinetic interface 204 processes the data and sends it to the controller 210. The signal quality unit 208 determines the quality of signal which the mobile station 28 is receiving (i.e., forward voice channel), according to information which the signal quality unit 208 receives from the transceiver interface 212. The signal quality unit 208 sends data in respect of the quality of signal of the mobile station 28, to the controller 210.

The list generator 214 generates a list of the candidate cells, according to data which it receives from the kinetic unit 200. Cells ranking unit 216 determines the rank of each candidate cell, and the time which the mobile station will remain in the coverage area of each candidate cell, according to data which it receives from the kinetic unit 200 and the signal quality unit 208. The final list ranking unit 218 determines the final rank of each candidate cell, according to the time which the cells ranking unit 216 determines for the mobile station 28, and also according to data which the kinetic unit 200 and the signal quality unit 208 provide. The final list ranking unit 218 provides for the mobile station 28 the ranks of the candidate cells. The mobile station 28 then selects the candidate cell having the highest rank, and by a known switching procedure, hands off to the selected cell. Communications are sent to the base station of the selected cell that the handoff is taking place.

Although the construction of the mobile station 28 has been illustrated in Figure 2 and described in terms of different units carrying out the different operational functions required in implementation of an embodiment of the present invention, the units may in practice be combined in one or more signal processors, e.g. digital signal processors, as will be apparent to those skilled in design of mobile stations. The different operational functions may be obtained by suitable pre-programming of the signal processor(s).

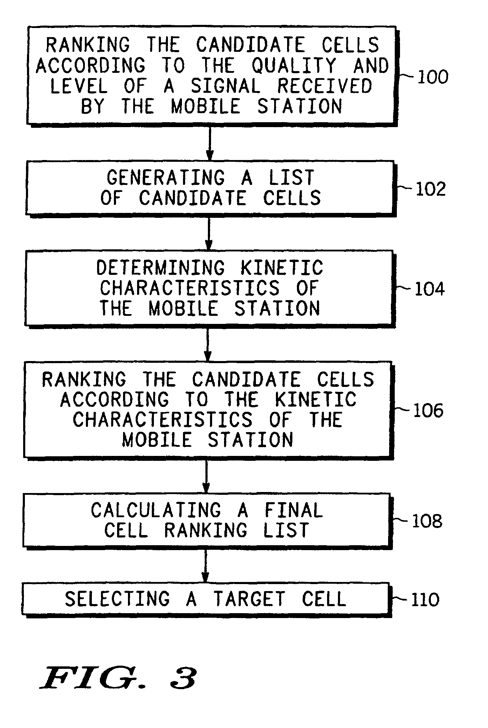

Reference is now made to Figure 3, which is a schematic illustration of a method for operating the mobile station 28, operating in accordance with an embodiment of the present invention. In a step 100, the rank of each of the cells is determined according to the quality and the strength level of a signal received by the mobile station 28 from the base station of the cell as measured in a manner well known per se in the art. With reference to Figure 1, mobile station 28 determines the rank of cells 14, 16 and others. Mobile station 28 assigns an attribute $A_m$ to the $m$-th cell ($m$=1,2,...$M$), which ranks the $m$-th cell relative to the other cells. The attribute $A_m$ can be an actual value of a signal level, an actual value of signal quality, e.g. measured in a known manner according to the number of errors per unit time detected in the received signal, or a rating value computed from measured signal strength and quality values, e. g. giving a number within a predetermined range (for example, from 0 to 100). Thus, candidate cell 14 has an attribute $A_{14}$, and candidate cell 16 has an attribute $A_{16}$, and so on. The attributes $A_m$ can be stored as a ranking list. Alternatively, each attribute $A_m$ can be added in step 102 to an entry in a list of the possible cells which are chosen as candidate cells .

In a step 102, a list of candidate cells is generated. With reference to Figure 1, mobile station 28 generates a list of candidate cells according to the result of step 100. The list of candidate cells includes cells 14 and 16, because mobile station 28 is located in cell 16, and it is moving toward cell 14 and receives signals of reasonable strength and quality from the base stations of these cells. Each entry in the list includes identification codes of the cells 14 and 16 and others and a ranking and/or rating of each cell, together optionally with other information relating to the cells, e.g. the location of the base stations 20 and 22, the distance of mobile station 28 from each of the base stations 20 and 22, and the like. The list of candidate cells is stored in a memory unit (not shown) in the controller 210 (Figure 2).

In a step 104, the kinetic characteristics of the mobile station 28 are determined with respect to the candidate cells. With reference to Figure 1, the mobile station 28 determines that it is located in the cell 12, and it is moving in the direction 30 with a speed $V$. The location, direction of movement and the speed of mobile station 28, can be determined according to the methods referred to earlier.

In a step 106, the rank of each of the candidate cells is determined according to the kinetic characteristics of the mobile unit determined in step 104. The mobile station 28 determines the ranking of each of the candidate cells 14 and 16 and (possibly others) according to estimated length of time the mobile station 28 calculates it will spend in each of the candidate cells as determined from the kinetic characterisitics determined in step 104. The kinetic ranking $K_m$ of the $m$-th candidate cell is a function of the estimated length of time of the mobile station 28 in the cell. For example, such a function can have the form:

$$K_m = c1 \cdot (180 - D_m) \cdot log(c2 \cdot S_m) / log(c3 \cdot L_m) \qquad (1)$$

where: $L_m$ is the distance of the mobile station 28 from the cell centre; $S_m$ is the speed of the mobile station relative to the cell centre; $D_m$ is the mobile station's movement direction relative to the cell's centre (degrees - 0-180), and c1, c2, c3 are constant factors. The base station of each cell is asumed to be at the centre of the cell.

The resulting ranking list can be stored as a ranking list. In the example shown in Figure 1, the mobile station 28 is moving in direction 30, from base station 18 toward base station 20. Thus, the ranking $K_{14}$ of candidate cell 14 is greater than the ranking $K_{16}$ of candidate cell 16.

In a step 108, a final cell ranking list is determined. With reference to Figure 1, the mobile station 28 determines the final ranking of candidate cells 14 and 16 (and possibly others). The final ranking $F_m$ of the $m$-th candidate cell can be a predetermined function of attribute $A_m$ and kinetic rank $K_m$ of the $m$-th candidate cell. For example, such a function can have the form:

$$F_m = A_m \cdot log(K_m) \qquad (2)$$

Preferably, the value of kinetic rank $K_m$ is in the range of 10 to 20, so that the attribute $A_m$ is the dominant parameter in Equation 1. Mobile station 28, then determines the final rankings $F_{14}$ and $F_{16}$ of candidate cells 14 and 16.

In step 110, a target cell is selected. With reference to Figure 1, the mobile station 28 selects the $m$-th candidate cell having the greatest final rank $F_m$ among the $M$ candidate cells, as the target cell. The attribute $A_{14}$ and the kinetic rank $K_{14}$ of candidate cell 14, are normally greater than attribute $A_{16}$ and kinetic rank $K_{16}$ of candidate cell 16. Therefore, normally $F_{14} > F_{16}$ and thus, the mobile station 28 hands off to the cell 14 in a known manner. This is in contrast to the prior art by which handoff to the cell 16 could have taken place based on the ranking in steps 100 and 102 alone thereby leading eventually to the requirement undesirably for a further handoff from cell 16 to cell 14.

In an alternative embodiment of the invention the calculations illustrated in Figure 3 may be carried out by a fixed unit within the system 10, e.g. the gateway 26. Such calculations may be carried out separately for a plurality of mobile systems operating in the system, e.g. all mobile stations. In this embodiment, the mobile station 28 sends to the gateway 26 via its currently serving base station 18 signals indicating the results of the measurements carried out by the mobile station 28 as referred to earlier, e.g. relating to change of position and received signal strength and/or quality. The gateway 26 eventually sends to the mobile station 28 a control signal indicating the identity of the base station selected by the gateway 26 to be the new serving station and, upon receiving this control signal, the mobile station 28 switches its connection to the newly selected base transceiver station as serving station.

**Claims**

1. A mobile station (28) for use in a cellular radio communication system providing communication between the mobile station and a serving one of a plurality of base transceiver stations each defining a cell of the system, the mobile station being operable to make calculations relating to candidates of the base transceiver stations (22, 20) to select which of the candidates should be the serving base transceiver station to the mobile station, the calculations including calculating a rate of change in the distance or range between the mobile station and each candidate base transceiver station and estimating a time the mobile station will be in the cell (14, 16) defined by the candidate base transceiver station, the mobile station being **characterised in that** it is operable also to derive information from active measurements using signals from the candidate base transceiver stations of the respective locations of such candidate base transceiver stations and to calculate a direction of movement of the mobile station relative to such candidate base transceiver stations and to estimate the time in the cells using the direction of movement information as well as the rate of change in distance or range infomation.

2. A mobile station according to claim 1 and which is operable to have an estimation of the distance of the mobile station from each of the candidate base transceiver stations and to calculate from changes in the respective distance estimations the respective directions of movement.

3. A mobile station according to claim 1 or claim 2 and which is operable to store a location of the base transceiver stations including the candidate stations.

4. A mobile station according to claim 1, claim 2 or claim 3 and which is operable to measure its own location and to calculate its distance from each of the candidate base transceiver stations.

5. A mobile station according to 4 and which includes a global positioning device (202) and which is operable to measure its own location by signals provided by the global positioning device.

6. A mobile station according to claim 4 and which is operable to measure its own position by measuring the time of arrival or time difference of arrival of signals from base transceiver stations.

7. A mobile station according to any one of the preceding claims and which is further operable to measure the strength and/or quality of signals it receives from base transceiver stations.

8. A mobile station according to any one of the preceding claims and which is operable to produce a list of the candidate base transceiver stations from signal strength and/or quality measurements of signals received by the mobile station.

9. A mobile station according to claim 8 and which is operable to rank the base transceiver stations according to the signal strength and/or quality mesurements and to list a number of the top ranked stations as the candidate stations.

10. A mobile station according to any one of the preceding claims and which is operable to carry out the calculations repeatedly whereby the base transceiver station seleted to act as the serving station to the mobile station is repeatedly re-assessed.

11. A method of operation in a cellular communications system providing radio communication between mobile stations and base transceiver stations wherein the mobile stations are operable to make calculations relating to candidates of the base transceiver stations (22, 20) to select which of the candidates should be the serving base transceiver station to the mobile station, the calculations including calculating a rate of change in the distance or range between the mobile station and each candidate base transceiver station and estimating a time the mobile station will be in the cell (14, 16) defined by the candidate base transceiver station, wherein the system includes at least one mobile station which is a mobile station according to claim 1 and wherein the at least one mobile station according to claim 1 derives information from active measurements using signals from the candidate base transceiver stations of the respective locations of such candidate base transceiver stations and calculates a direction of movement of the mobile station relative to such candidate base transceiver stations and estimates the time in the cells using the direction of movement information as well as the rate of change in distance or range information.

12. A method according to claim 11 and wherein the system operates in accordance with TETRA communication protocol procedures.

**Patentansprüche**

1. Mobilstation (28) zur Verwendung in einem zellularen Funkkommunikationssystem, das eine Kommunikation zwischen der Mobilstation und einer bedienenden aus einer Mehrzahl von Basistransceiverstationen zur Verfügung stellt, wobei jede eine Zelle des Systems definiert, wobei die Mobilstation so betrieben werden kann, dass sie Berechnungen in Bezug auf Kandidaten der Basistransceiverstationen (22, 20) durchführt, um auszuwählen, welcher der Kandidaten die bedienende Basistransceiverstation für die Mobilstation sein soll, wobei die Berechnungen ein Berechnen einer Rate der Veränderung des Abstands oder des Bereichs zwischen der Mobilstation und jeder Kandidaten-Basistransceiverstation und ein Schätzen einer Zeit umfassen, welche die Mobilstation in der Zelle (14, 16) sein wird, die durch die Kandidaten-Basistransceiverstation definiert wird, wobei die Mobilstation **dadurch gekennzeichnet ist, dass** sie so betrieben werden kann, dass sie aus aktiven Messungen unter Verwendung von Signalen von den Kandidaten-Basistransceiverstationen Informationen über entsprechende Standorte von derartigen Kandidaten-Basistransceiverstationen ableitet und eine Bewegungsrichtung der Mobilstation relativ zu derartigen Kandidaten-Basistransceiverstationen berechnet und die Zeit in den Zellen unter Verwendung von Informationen über die Bewegungsrichtung sowie von Informationen über die Rate der Veränderung des Abstands oder des Bereichs schätzt.

2. Mobilstation nach Anspruch 1, die so betrieben werden kann, dass sie über eine Schätzung des Abstands der Mobilstation von jeder der Kandidaten-Basistransceiverstationen verfügt und dass sie aus Veränderungen in den entsprechenden Entfernungsschätzungen die entsprechenden Bewegungsrichtungen berechnet.

3. Mobilstation nach Anspruch 1 oder 2, die so betrieben werden kann, dass sie einen Standort der Basistransceiverstationen einschließlich der Kandidaten-Stationen speichert.

4. Mobilstation nach Anspruch 1, 2 oder 3, die so betrieben werden kann, dass sie ihren eigenen Standort misst und ihren Abstand von jeder der Kandidaten-Basistransceiverstationen berechnet.

5. Mobilstation nach Anspruch 4, die eine globale Standortermittlungseinrichtung (202) umfasst und die so betrieben werden kann, dass sie ihren eigenen Standort durch Signale berechnet, die von der globalen Standortermittlungseinrichtung zur Verfügung gestellt werden.

6. Mobilstation nach Anspruch 4, die so betrieben werden kann, dass sie ihre eigene Position durch Messen einer Ankunftszeit oder einer Zeitdifferenz der Ankunft von Signalen von Basistransceiverstationen berechnet.

7. Mobilstation nach einem der vorhergehenden Ansprüche, die weiterhin so betrieben werden kann, dass sie die Stärke und/oder die Qualität von Signalen misst, die sie von Basistransceiverstationen empfängt.

8. Mobilstation nach einem der vorhergehenden Ansprüche, die so betrieben werden kann, dass sie eine Liste der Kandidaten-Basistransceiverstationen aus Signalstärkeund/oder Qualitätsmessungen von Signalen erzeugt, die von der Mobilstation empfangen werden.

9. Mobilstation nach Anspruch 8, die so betrieben werden kann, dass sie die Basistransceiverstationen gemäß den Signalstärke- und/oder Qualitätsmessungen einordnet und eine Anzahl der am höchsten eingeordneten Stationen als die Kandidaten-Stationen auflistet.

**10.** Mobilstation nach einem der vorhergehenden Ansprüche, die so betrieben werden kann, dass sie die Berechnungen wiederholt ausführt, wobei die Basistransceiverstation, die ausgewählt wurde, um als die bedienende Station für die Mobilstation zu agieren, wiederholt neu beurteilt wird.

**11.** Verfahren zum Betrieb in einem zellularen Kommunikationssystem, das eine Funkkommunikation zwischen Mobilstationen und Basistransceiverstationen zur Verfügung stellt, wobei die Mobilstationen so betrieben werden können, dass sie Berechnungen in Bezug auf Kandidaten der Basistransceiverstationen (22, 20) durchführen, um auszuwählen, welcher der Kandidaten die bedienende Basistransceiverstation für die Mobilstation sein soll, wobei die Berechnungen ein Berechnen einer Rate der Veränderung des Abstands oder des Bereichs zwischen der Mobilstation und jeder Kandidaten-Basistransceiverstation und ein Schätzen einer Zeit umfassen, welche die Mobilstation in der Zelle (14, 16) sein wird, die durch die Kandidaten-Basistransceiverstation definiert wird, wobei das System mindestens eine Mobilstation umfasst, welche eine Mobilstation gemäß Anspruch 1 ist, und wobei die zumindest eine Mobilstation gemäß Anspruch 1 aus aktiven Messungen unter Verwendung von Signalen von den Kandidaten-Basistransceiverstationen Informationen über entsprechende Standorte von derartigen Kandidaten-Basistransceiverstationen ableitet und eine Bewegungsrichtung der Mobilstation relativ zu derartigen Kandidaten-Basistransceiverstationen berechnet und die Zeit in den Zellen unter Verwendung von Informationen über die Bewegungsrichtung sowie von Informationen über die Rate der Veränderung des Abstands oder des Bereichs schätzt.

**12.** Verfahren nach Anspruch 11, bei dem das System gemäß den TETRA-Kommunikationsprotokollprozeduren arbeitet.

## Revendications

**1.** Poste mobile (28) destiné à être utilisé dans un système de communication radio cellulaire établissant une communication entre le poste mobile et desservant une pluralité de postes émetteurs-récepteurs de base définissant chacun une cellule du système, le poste mobile pouvant agir de manière à exécuter des calculs concernant des candidats des postes émetteurs-récepteurs de base (22,20) pour sélectionner lequel des candidats doit être le poste émetteur-récepteur de base de service pour le poste mobile, les calculs incluant le calcul d'une vitesse de variation de la distance ou de la portée entre le poste mobile et chaque poste émetteur-récepteur de base candidat et l'estimation d'une durée pendant laquelle le poste mobile est dans la cellule (14,16), définie par le poste émetteur-récepteur de base candidat, le poste mobile étant **caractérisé en ce qu'**il peut fonctionner également de manière à obtenir une information à partir de mesures actives en utilisant des signaux provenant des postes émetteurs-récepteurs de base candidats des emplacements respectifs de tels postes émetteurs-récepteurs de base candidats et calculer une direction de déplacement du poste mobile par rapport à de tels postes émetteurs-récepteurs de base candidat et estimer la durée dans les cellules en utilisant l'information de direction déplacement ainsi que l'information de vitesse de variation de la distance ou de la portée.

**2.** Poste mobile selon la revendication 1 et qui peut agir de manière à obtenir une estimation de la distance du poste mobile à partir de chacun des postes émetteurs-récepteurs de base candidats et calculer, à partir de variations des estimations respectives de distance, les directions respectives de déplacement.

**3.** Poste mobile selon la revendication 1 ou la revendication 2, qui peut agir de manière à mémoriser un emplacement des postes émetteurs-récepteurs de base incluant les postes candidats.

**4.** Poste mobile selon la revendication 1, la revendication 2 ou la revendication 3 et qui peut agir de manière à mesurer son propre emplacement et calculer sa distance par rapport à chacun des postes émetteurs-récepteurs de base candidats.

**5.** Poste mobile selon la revendication 4 et qui inclut un dispositif de positionnement global (202) et peut agir de manière à mesurer son propre emplacement au moyen de signaux délivrés par le dispositif de positionnement global.

**6.** Poste mobile selon la revendication 4 et qui peut agir de manière à mesurer sa propre position par mesure de l'instant d'arrivée ou de l'intervalle de temps pour les arrivées de signaux provenant des postes émetteurs-récepteurs de base.

**7.** Poste mobile selon l'une quelconque des revendications précédentes et qui peut agir en outre de manière à mesurer l'intensité et/ou la qualité de signaux qu'il reçoit de la part de postes émetteurs-récepteurs de base.

**8.** Poste mobile selon l'une quelconque des revendications précédentes et qui peut agir de manière à produire une liste des postes émetteurs-récepteurs de base candidats à partir de mesure de l'intensité du signal et/ou de la qualité de signaux reçus par le poste mobile.

**9.** Poste mobile selon la revendication 8 et qui peut agir de manière à classer les postes émetteurs-récepteurs de base en fonction de mesures de l'intensité et/ou de la qualité de signaux et lister un certain nombre de postes ayant un classement supérieur en tant que postes candidats.

**10.** Poste mobile selon l'une quelconque des revendications précédentes, qui peut agir de manière à effectuer des calculs d'une manière répétée, ce qui permet qu'un accès au poste émetteur-récepteur de base sélectionné d'agir en tant que poste de service pour le poste mobile, est réactivé de façon répétée.

**11.** Procédé de fonctionnement dans un système de communication cellulaire établissant une communication radio entre des postes mobiles et des postes émetteurs-récepteurs de base, selon lequel les postes mobiles peuvent agir de manière à effectuer des calculs concernant des candidats aux postes émetteurs-récepteurs de base (22,20) pour sélectionner lequel des candidats doit être le poste émetteur-récepteur de base de service pour le poste mobile, les calculs incluant le calcul d'une vitesse de variation de la distance ou de la portée entre le poste mobile et le poste émetteur-récepteur de base candidat et l'estimation d'un instant auquel le poste mobile est situé dans la cellule (14,16) définie par le poste émetteur-récepteur de base candidat, et selon lequel le système inclut au moins un poste mobile qui est un poste mobile selon la revendication 1, et selon lequel le au moins un poste mobile selon la revendication 1 obtient une information à partir de mesures actives en utilisant des signaux provenant des postes émetteurs-récepteurs de base candidats des emplacements respectifs, de tels postes émetteurs-récepteurs de base candidats et calcule une direction de déplacement du poste mobile par rapport à de tels postes émetteurs-récepteurs de base candidats et estime le temps dans les cellules en utilisant l'information de direction de déplacement ainsi que l'information de vitesse de variation de distance ou de portée.

**12.** Procédé selon la revenndication 11, et où le système fonctionne selon les procédures du protocole de communication du système radio à commutation automatique terrestre TETRA.

**FIG. 1**

10

**FIG. 2**

RANKING THE CANDIDATE CELLS ACCORDING TO THE QUALITY AND LEVEL OF A SIGNAL RECEIVED BY THE MOBILE STATION —100

GENERATING A LIST OF CANDIDATE CELLS —102

DETERMINING KINETIC CHARACTERISTICS OF THE MOBILE STATION —104

RANKING THE CANDIDATE CELLS ACCORDING TO THE KINETIC CHARACTERISTICS OF THE MOBILE STATION —106

CALCULATING A FINAL CELL RANKING LIST —108

SELECTING A TARGET CELL —110

FIG. 3